Europäisches Patentamt

European Patent Office

Office européen des brevets

(19)

(11) Numéro de publication : **0 067 092**
**B1**

(12) **FASCICULE DE BREVET EUROPÉEN**

(45) Date de publication du fascicule du brevet :
30.01.85

(21) Numéro de dépôt : 82400903.9

(22) Date de dépôt : 14.05.82

(51) Int. Cl.⁴ : **C 04 B 35/46, H 01 G 4/12,
H 01 B 3/12**

(54) **Composition céramique diélectrique à base de titanate de baryum, d'oxyde de lithium et de fluorure de cuivre, condensateur utilisant une telle composition et procédé de fabrication de ladite composition.**

(30) Priorité : 26.05.81 FR 8110457

(43) Date de publication de la demande :
15.12.82 Bulletin 82/50

(45) Mention de la délivrance du brevet :
30.01.85 Bulletin 85/05

(84) Etats contractants désignés :
DE GB

(56) Documents cités :
FR-A- 1 024 366
FR-A- 2 439 171
US-A- 2 815 291
US-A- 4 082 906

(73) Titulaire : **L.C.C.-C.I.C.E. - COMPAGNIE EURO-
PEENNE DE COMPOSANTS ELECTRONIQUES
50, rue Jean-Pierre Timbaud B.P. 301
F-92402 Courbevoie (FR)**

(72) Inventeur : **Lagrange, Alain
THOMSON-CSF SCPI 173 bld Haussmann
F-753769 Paris Cedex 08 (FR)**
Inventeur : **Beauger, Alain
THOMSON-CSF SCPI 173 bld Haussmann
F-75379 Paris Cedex 08 (FR)**

(74) Mandataire : **Vesin, Jacques et al
THOMSON-CSF SCPI 173, Bld Haussmann
F-75379 Paris Cedex 08 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne une composition céramique diélectrique de nature ferro-électrique, à base de titanate de baryum, ainsi qu'un condensateur utilisant une telle composition. Elle concerne également un procédé de fabrication de cette composition.

Les compositions céramiques à base de titanate de baryum sont bien connues notamment dans leurs applications pour la réalisation de condensateur. Elles possèdent en effet une très haute constante diélectrique les rendant tout à fait adaptées à une telle utilisation. De telles compositions céramiques bien connues de l'homme de l'art sous l'appellation « type II », sont décrites par exemple dans les brevets américains 2 402 518, 2 433 211 et 3 529 978.

Généralement, ces compositions céramiques sont frittées à l'air ou sous atmosphère réductrice à des températures voisines de 1 200 à 1 400 °C. Lorsqu'on réalise des condensateurs tels que par exemple des condensateurs du type multicouches, les électrodes métalliques de ces condensateurs sont bien entendu déposés sur la matière céramique avant le frittage. Par conséquent, ceci nécessite d'utiliser des électrodes en métaux précieux tels que le platine, la paladium, l'or ou leurs alliages. Ces électrodes sont généralement déposées par sérigraphie à l'aide d'un écran de soie.

De telles compositions céramiques dans leur utilisation pour la fabrication de condensateurs présentent donc essentiellement deux inconvénients :

— il est nécessaire d'utiliser des métaux précieux pour réaliser les électrodes, ce qui augmente considérablement le coût de tels condensateurs,

— la température de frittage élevée augmente les risques d'interaction entre la céramique et les électrodes, ce qui augmente corrélativement la probabilité de défauts dans lesdites électrodes.

On a donc cherché récemment à mettre au point des compositions céramiques diélectriques permettant d'utiliser des métaux communs, d'un prix beaucoup plus bas en abaissant la température de frittage desdites compositions.

Il a maintenant été trouvé des compositions céramiques diélectriques de type II qui tout en ayant d'excellentes propriétés diélectriques, permettent de résoudre le problème posé ci-dessus. Dans ce but, les compositions céramiques diélectriques selon l'invention sont caractérisées en ce qu'elles comportent de 90 % à 98 % en poids de titanate de baryum, de 0,5 % à 2,5 % en poids d'oxyde de lithium et de 1,5 % à 8 % en poids de fluorure de cuivre.

On a en effet constaté que de manière surprenante, les nouvelles compositions céramiques décrites ci-dessus possédaient une température de frittage nettement abaissée par rapport aux compositions similaires connues tout en ayant des propriétés électriques tout à fait excellentes. En particulier, lesdites compositions possèdent d'excellentes propriétés électriques lorsque l'on utilise un titanate de baryum dans lequel le rapport molaire $X = TiO_2/BaO$ est inférieur à 1, et de préférence compris entre 0,97 et 0,98. Dans ce dernier cas, ainsi qu'on le constatera par la suite, les propriétés électriques de ces compositions sont tout à fait exceptionnelles.

Une telle stœchiométrie dans le titanate de baryum utilisé va tout à fait à l'encontre des idées reçues dans ce domaine lorsqu'on désire abaisser la température de frittage. En effet, l'homme de l'art sait qu'habituellement les compositions à base de titanate de brayum voient leur température de frittage s'abaisser lorsqu'on augmente la stœchiométrie du titanate de baryum, c'est-à-dire lorsqu'on prévoit un excès d'ions titane par rapport au nombre d'ions baryum, de manière à ce que le rapport X précédemment cité soit supérieur à 1. Généralement, cette augmentation est de l'ordre de 2 %.

Inversement, il est bien connu qu'une diminution du nombre d'ions titane par rapport au nombre d'ions baryum dans le titanate de baryum conduit habituellement à une augmentation de la température de frittage. (Par température de frittage, on entend bien entendu la température ou plage de températures à laquelle on obtient une densification maximum du produit).

Selon un mode préférentiel de réalisation, les compositions céramiques diélectriques selon l'invention sont telles que l'oxyde de lithium est introduit dans la composition sous forme d'un sel de lithium capable de le libérer à haute température. De préférence, ce sel de lithium sera choisi parmi les nitrates, sulfates ou carbonates de lithium. Dans ce cas, les proportions en poids du sel de lithium seront telles qu'après décomposition dudit sel à haute température, on obtienne une quantité d'oxyde de lithium comprise dans la fourchette mentionnée ci-dessus.

Il faut bien comprendre en effet que si l'on introduit dans la composition de départ un sel de lithium capable de libérer de l'oxyde de lithium $Li_2O$, il importe de ne pas compter dans le poids de la composition que la fraction molaire du sel correspondant à l'oxyde de lithium. Par exemple, si l'on introduit dans la composition 30 g de carbonate de lithium $Li_2CO_3$, qui libérera à haute température l'oxyde de lithium et le gaz carbonique, celui-ci ne comptera que pour 30 g × (poids moléculaire $Li_2O$/poids moléculaire $Li_2CO_3$), soit 30 g × (29,88/73,88) = 12,13 g.

D'une manière générale, la température de frittage des compositions selon l'invention sera supérieure à 750 °C et variera entre 750° et 1 000 °C.

Le procédé de réalisation des condensateurs selon l'invention consiste donc à réaliser une chamotte contenant le titanate de baryum, le fluorure de cuivre et le sel de lithium dans les proportions indiquées ci-dessus puis à réaliser ensuite le condensateur de manière connue en soi, la température de frittage étant supérieure ou égale à 750 °C.

0 067 092

L'invention sera mieux comprise à l'aide des exemples de réalisation suivants, donnés à titre non limitatif :

Exemples 1 à 4

Dans un broyeur à billes, on introduit 100 g d'un mélange contenant du titanate de baryum $BaTiO_3$, du fluorure de cuivre $CuF_2$ et du carbonate de lithium $Li_2CO_3$. Le carbonate de lithium libérera après frittage de l'oxyde de lithium $Li_2O$. Dans le tableau I ci-dessous, on donne le pourcentage pondéral des différents éléments de la composition, le pourcentage en poids de carbonate de lithium étant ramené à son pourcentage en poids correspondant en oxyde de lithium $Li_2O$ (voir ci-dessus).

Le broyage de ces différents composants est effectué en présence de 150 cm³ d'alcool à l'aide de 200 g de billes d'alumine, durant 15 heures.

La barbotine obtenue est séchée, tamisée et mélangée ensuite à 130 g de latex à 3 % dans le trichloréthane. La pâte obtenue est mise sous forme de disques qui, après frittage, ont un diamètre de 8,3 mm et 0,6 mm environ d'épaisseur. Ces disques sont frittés à une température de 930 °C, sous air, et pendant une heure trente minutes. Chacune des faces des condensateurs est alors métallisée à l'aide d'une pâte d'argent.

Les résultats obtenus sont indiqués dans le tableau I ci-dessous, dans lequel d désigne la densité de la céramique, R le retrait linéaire, C la capacité, et tangente δ les pertes diélectriques mesurées à 1 KHz sous 1 volt efficace, ε la constante diélectrique du matériau, RI la résistance d'isolement du condensateur mesuré sous 50 volts et ΔC/C la variation relative de capacité entre la valeur de la capacité à 20 °C et celle de celle-ci aux différentes températures mentionnées (− 30 °C, + 10 °C et + 85 °C).

La stœchiométrie du titanate de baryum utilisé est telle que le rapport X = TiO₂/BaO était égale à 0,97, c'est-à-dire que l'on a un excès de baryum par rapport au titane.

Par effet de champ, à 600 volts, on entend la variation relative de capacité $\Delta C/C = (C_0-C_{600})/C_0$, $C_0$ étant la valeur de la capacité mesurée à 1 KHz sous 1 V eff., sans polarisation continue, $C_{600}$ étant la valeur de la capacité mesurée dans les mêmes conditions, mais sous une polarisation continue de 600 volts. Compte tenu de l'épaisseur des disques de 0,6 mm, ceci représente une tension de polarisation de 1 V/micron.

Par ailleurs, TC désigne la température de curie du matériau, température au-dessus de laquelle celui-ci est paraélectrique et en dessous de laquelle il est ferro-électrique.

Tableau I

| EXEMPLE N° | | 1 | 2 | 3 | 4 |
|---|---|---|---|---|---|
| Ba TiO₃ (%) | | 97,5 | 95,1 | 92,7 | 90,5 |
| Li₂ O (%) | | 0,55 | 1,1 | 1,7 | 2,1 |
| Cu F₂ (%) | | 1,95 | 3,8 | 5,6 | 7,4 |
| d (g/m3) | | 5,58 | 5,52 | 5,67 | 5,49 |
| R (%) | | 15,6 | 16,3 | 17,2 | 17,7 |
| C (pF) | | 3194 | 3450 | 2275 | 2278 |
| tg δ × 10⁺⁴ | | 80 | 73 | 18 | 50 |
| ε (20°C) | | 5048 | 5384 | 4704 | 4238 |
| RI (GΩ) | | 400 | 400 | 100 | 170 |
| ΔC/C | − 30°C | − 5% | + 3% | + 59% | + 47% |
| | + 10°C | + 5% | + 5% | + 24% | + 21% |
| | + 85°C | − 47% | − 53% | − 51% | − 51% |
| Effets de champ (%) (600 v) soit 1 V/μ | | − 16,5 | − 24,2 | − 13,0 | − 14,6 |

3

# 0 067 092

(Fortsetzung)

| EXEMPLE N° | 1 | 2 | 3 | 4 |
|---|---|---|---|---|
| $\mathcal{E}$ à TC | 5900 | 5400 | 7000 | 6000 |
| TC (°C) | 0 | - 10 | - 30 | - 20 |

Ce tableau montre clairement les variations des propriétés des compositions diélectriques selon l'invention pour une stœchiométrie donnée du titanate de baryum en fonction du taux de fluorure de cuivre et d'oxyde de lithium utilisé. On constate que la valeur de la constante diélectrique est particulièrement élevée, alliée à de très faibles pertes diélectriques, une résistance d'isolement élevée ainsi qu'un effet limité de champ électrique superposé. C'est dans l'exemple 3 que l'on obtient le meilleur compromis par ces différentes valeurs.

## Exemples 5 à 9

Les exemples ci-après montrent clairement l'influence de la stœchiométrie du titanate de baryum utilisé pour une concentration donnée de fluorure de cuivre égale 3,8 % en poids et d'oxyde de lithium, introduit sous forme de carbonate de lithium, égale à 1,1 % en poids.

La préparation des disques et des condensateurs de ces exemples de réalisation est en tout point identique à celle définie dans les exemples 1 à 4 précédents.

Les résultats obtenus sont mentionnés dans le tableau II ci-dessous :

Tableau II

| EXEMPLES N° | | 5 | 6 | 7 | 8 | 9 |
|---|---|---|---|---|---|---|
| $Ti\,O_2/Ba\,O$ | | 0,94 | 0,97 | 0,98 | 0,99 | 1,03 |
| d (g/cm3) | | 5,44 | 5,52 | 5,63 | 5,56 | 4,72 |
| R (%) | | 17,5 | 16,3 | 16,4 | 16,0 | 10,8 |
| C (pF) | | 1312 | 3450 | 3212 | 1203 | 2342 |
| $tg\,\delta \times 10^{+4}$ | | 92 | 73 | 155 | 178 | 910 |
| $\mathcal{E}$ (20°C) | | 2105 | 5384 | 4957 | 1696 | 2628 |
| RI (G$\Omega$) | | 200 | 400 | 1400 | 250 | 5 |
| $\Delta$C/C | - 30° | + 26% | + 3% | - 30% | - 19% | - 40% |
| | + 10° | + 8% | + 5% | - 8% | - 6% | - 16% |
| | + 85° | - 34% | - 53% | - 43% | - 16% | + 5% |
| Effets de champ (%) (600 v) soit 1 V/$\mu$ | | - 14,0 | - 24,2 | - 29,8 | - 17,3 | - 37,3 |
| $\mathcal{E}$ à TC | | 2600 | 5400 | 6300 | 1750 | 3200 |
| TC (°C) | | - 40 | - 10 | 0 | + 40 | + 70 |

On constate d'après ce tableau que les meilleurs résultats sont obtenus pour une valeur X du rapport stœchiométrique de $TiO_2/BaO$ variant entre 0,97 et 0,98.

4

**0 067 092**

## Revendications

1. Composition céramique diélectrique, caractérisée en ce qu'elle comporte de 90 % à 98 % en poids de titanate de baryum, de 0,5 % à 2,5 % en poids d'oxyde de lithium et de 1,5 % à 8 % en poids de fluorure de cuivre.

2. Composition céramique diélectrique selon la revendication 1, caractérisée en ce qu'elle comporte un titanate de baryum dans lequel le rapport molaire X = $TiO_2$/BaO est inférieur à 1.

3. Composition céramique diélectrique selon la revendication 2, caractérisée en ce que X est supérieur ou égal à 0,97 et inférieur ou égal à 0,98.

4. Composition céramique diélectrique selon l'une des revendications 1 à 3, caractérisée en ce que l'oxyde de lithium présent dans cette composition est introduit sous forme d'un sel de lithium capable de le libérer à haute température.

5. Composition céramique diélectrique selon la revendication 4, caractérisée en ce que le sel de lithium est choisi parmi les nitrates, sulfates ou carbonates de lithium.

6. Condensateur électrique comportant au moins une couche diélectrique revêtue d'armature métallique conductrice, caractérisé en ce que la couche diélectrique est constituée d'une composition conforme à l'une des revendications 1 à 5.

7. Procédé de fabrication d'un condensateur électrique, caractérisé en ce qu'il consiste à réaliser une chamotte comportant notamment une composition céramique diélectrique selon l'une des revendications 1 à 5, l'oxyde de lithium étant introduit sous forme d'un sel, à réaliser ensuite à l'aide de ladite chamotte le condensateur de manière connue en soi, ledit condensateur possédant une couche céramique diélectrique ayant été frittée à une température supérieure ou égale à 750 °C, température à laquelle le sel de lithium est décomposé et engendre notamment de l'oxyde de lithium.

## Claims

1. Ceramic dielectric composition, characterized in that it comprises 90 % to 98 % by weight of barium titanate, 0.5 % to 2.5 % by weight of lithium oxide and 1.5 % to 8 % by weight of copper fluoride.

2. Ceramic dielectric composition according to claim 1, characterized in that it comprises a barium titanate in which the molar ratio X = $TiO_2$/BaO is lower than 1.

3. Ceramic dielectric composition according to claim 2, characterized in that X is higher than or equal to 0.97 and lower than or equal to 0.98.

4. Ceramic dielectric composition according to claims 1 to 3, characterized in that the lithium oxide present in this composition is introduced in the form of a lithium salt able torelease said lithium oxide at high temperature.

5. Ceramic dielectric composition according to claim 4, characterized in that the lithium salt is selected from among nitrates, sulphates or carbonates of lithium.

6. Electric capacitance comprising at least one dielectric layer covered with a conducting metallic armature, characterized in that the dielectric layer is constituted of a composition according to one of claims 1 to 5.

7. Process for the manufacture procedure of an electric capacitance, characterized in that it comprises the formation of a chamotte mainly consisting of a ceramic dielectric composition according to one of claims 1 to 5, the lithium being introduced in the form of a salt, then of the said chamotte to form the capacitance by a known method, the said capacitance comprising a dielectric ceramic layer having been sintered to a temperature higher or equal to 750 °C, temperature at which the lithium salt decomposes and forming in particular lithium oxide.

## Ansprüche

1. Keramische dielektrische Zusammensetzung dadurch gekennzeichnet, dass sie aus 90 bis 98 Gewicht% von Barium Titanat, von 0,5 bis 2,5 Gewicht% von lithium Oxyd und von 1,5 bis 8 Gewicht% von Kupfer Fluorid besteht.

2. Keramische dielektrische Zusammensetzung nach Anspruch 1, dadurch gekennzeichnet, dass sie aus Barium Titanat besteht, dessen Mol-Verhältnis X = $TiO_2$/BaO weniger als 1 ist.

3. Keramische dielektrische Zusammensetzung nach Anspruch 2, dadurch gekennzeichnet, dass X mehr oder gleich 0,97 und weniger oder gleich 0,98 ist.

4. Keramische dielektrische Zusammensetzung nach einem der Ansprüche 1 bis 3, dadurch gekennzeichnet, dass das in dieser Zusammensetzung vorliegende Lithium Oxyd in der Form von Lithiumsalz eingereicht wird welches in hoher Temperatur Lithiumoxyd befreien kann.

5. Keramische dielektrische Zusammensetzung nach Anspruch 4, dadurch gekennzeichnet, dass das Nitriumsalz aus Nitraten, Sulfaten oder Lithiumkarbonat gewählt wird.

6. Keramischer Kondensator der wenigstens eine dielektrische Schicht eine leitende metallische Armatur enthält, dadurch gekennzeichnet, dass die dielektrische Schicht aus einer Zusammensetzung nach einem der Ansprüche 1 bis 5 besteht.

5

7. Herstellungsverfahren eines elektrischen Kondensators, dadurch gekennzeichnet, dass es durch Bereitung einer Schamotte, in welcher das Lithiumoxyd in Salzform eingereicht wird und die unter anderem die keramische dielektrische Zusammensetzung nach einem der Ansprüche 1 bis 5 enthält, und durch Benützung dieser dann zur Bildung eines Kondensators mittels eines bekannten Verfahrens hergestellt wird, welcher Kondensator eine dielektrische keramische Schicht der bei einer Temperatur von gleich oder mehr als 750 °C gesuntert wird enthält, Temperatur auf welche das lithiumsalz zersetzt und unter anderem in Lithiumoxyd befreit wird.